# EUROPÄISCHE PATENTANMELDUNG

(11) **EP 4 796 807 A1**
(43) Veröffentlichungstag der Anmeldung: **26.08.2026**
(21) Anmeldenummer: 25159760.5
(22) Anmeldetag: 24.02.2025
(51) Int. Cl.: F16F 13/16

(54) **LAGERBUCHSE**

(71) Anmelder: Vibracoustic SE, 69469 Weinheim (DE)
(72) Erfinder: WANG, Qian, Wuxi City (CN); SHANG, Zhenfeng, Wuxi City (CN)
(74) Vertreter: Patentanwälte Olbricht Buchhold Keulertz

(57) **Zusammenfassung**

Vorgeschlagen wird eine Lagerbuchse 10 zur hydraulischen Dämpfung in axialer Richtung R1, wobei die Lagerbuchse 10 einen Kern 20, einen Elastomerkörper 30, eine Käfigstruktur 50, 51, 52, wenigstens zwei Kanalhalbschalen 61, 62, eine Außenhülse 40 und wenigstens zwei hydraulische Kammern 81, 82 aufweist, die sich dadurch auszeichnet, dass die Käfigstruktur 50, 51, 52 und/oder der Kern 20 Versteifungsstrukturen 54, 21 für den Elastomerkörper 30 aufweisen, wobei sich Versteifungsstrukturen 21, die am Kern 20 ausgebildet sind, in wenigstens zwei radiale Richtungen R2, R3 unterschiedlich weit nach außen erstrecken, und wobei sich Versteifungsstrukturen 54, die an der Käfigstruktur 50, 51, 52 ausgebildet sind, in wenigstens den zwei radiale Richtungen R2, R3 unterschiedlich weit nach innen erstrecken, wobei der Elastomerkörper 30 rotationssymmetrisch ausgebildet ist.

## Beschreibung

Die Erfindung betrifft eine Lagerbuchse gemäß dem Oberbegriff von Anspruch 1.

Lagerbuchsen zur hydraulischen Dämpfung in axialer Richtung sind bekannt. Sie weisen typischerweise einen Lagerkern auf, der über einen Elastomerkörper mit einer Außenhülse verbunden ist. In dem Elastomerkörper sind Kammern ausgebildet, die eine hydraulische Flüssigkeit aufnehmen. Der Elastomerkörper weist dabei eine Trennmembran auf, die Kammern voneinander trennt. Ein fluider Ausgleichskanal verbindet die Kammern.

Ein Beispiel für eine solche Lagerbuchse offenbart die US 10,578,188 B2. Dort ist ein Elastomerkörper zwischen einer inneren Hülse und einer äußeren Hülse angeordnet. Der Elastomerkörper weist eine Trennmembran auf, die zwei Flüssigkeitskammern voneinander trennt. Die Trennmembran erstreckt sich in radialer Richtung von der inneren Hülse in Richtung zur äußeren Hülse. Das der äußeren Hülse zugewandte Ende der Trennmembran wird von einer als Teilvorrichtung bezeichneten Vorrichtung gehalten. Die Teilvorrichtung, in der ebenfalls die fluiden Ausgleichskanäle ausgebildet sind, weist dazu einen ringförmigen feststehenden Vorsprung auf, der sich in radialer Richtung auf die Trennmembran zu erstreckt.

Problematisch ist bei solchen Lösungen zumeist, dass sich der ringförmige Vorsprung, der die Trennmembran hält, relativ weit in die Fluidkammer hinein erstrecken muss, um die Trennmembran sicher zu halten. Die Trennmembran ist in der Folge relativ kurz und damit steif.

Ausgehend davon stellt sich die Aufgabe, eine verbesserte Lagerbuchse bereitzustellen, die eine hydraulische Dämpfung in axialer Richtung bewirken kann. Die Lagerbuchse soll insbesondere möglichst einfach zu montieren sein. Weiterhin soll die Lagerbuchse hinsichtlich der Pumpeigenschaften der hydraulischen Kammern in axialer Richtung an die jeweiligen Bedürfnisse des Einsatzortes der Lagerbuchse anpassbar sein.

Hauptmerkmale der Erfindung sind im kennzeichnenden Teil von Anspruch 1 angegeben. Ausgestaltungen sind Gegenstand der Ansprüche 2 bis 15.

Vorgeschlagen wird eine Lagerbuchse zur hydraulischen Dämpfung in axialer Richtung R1, wobei die Lagerbuchse einen Kern, einen Elastomerkörper, eine Käfigstruktur, wenigstens zwei Kanalhalbschalen, eine Außenhülse und wenigstens zwei hydraulische Kammern aufweist, wobei die hydraulischen Kammern durch wenigstens einen fluidleitenden Kanal miteinander verbunden sind Die Lagerbuchse zeichnet sich dadurch aus, dass die Käfigstruktur und/oder der Kern Versteifungsstrukturen für den Elastomerkörper aufweisen, wobei sich Versteifungsstrukturen, die am Kern ausgebildet sind, in wenigstens zwei radiale Richtungen R2, R3 unterschiedlich weit nach außen erstrecken, und wobei sich Versteifungsstrukturen, die an der Käfigstruktur ausgebildet sind, in wenigstens den zwei radiale Richtungen R2, R3 unterschiedlich weit nach innen erstrecken, wobei der Elastomerkörper rotationssymmetrisch ausgebildet ist.

Die Lagerbuchse hat eine im Wesentlichen zylindrische Form, wobei die zentrale Achse des Zylinders der axialen Richtung R1 entspricht. Schneidet man die Lagerbuchse in einer geometrischen Ebene, die sich senkrecht zu dieser Achse, d. h. zur axialen Richtung R1, erstreckt, so hat die Lagerbuchse im Wesentlichen einen kreisförmigen Querschnitt. Den Mittelpunkt dieses kreisförmigen Querschnittes bildet die zentrale Achse des Zylinders.

Die radialen Richtungen R2 und R3 liegen in einer solchen geometrischen Ebene, die sich senkrecht zur axialen Richtung R1 erstreckt. Betrachtet man den kreisförmigen Querschnitt der Lagerbuchse in dieser Ebene, so können die Richtungen R2, R3 sich sowohl vom Mittelpunkt zum äußeren Umfang des Querschnitts erstrecken als auch vom äußeren Umfang des Querschnitts zum Mittelpunkt des Querschnitts. Mit anderen Worten, die Richtungen R2, R3 verlaufen radial zur zentralen Achse der Lagerbuchse.

Eine Erstreckung der Richtungen R2, R3 in Richtung zur zentralen Achse der Lagerbuchse hin, d. h. zum Mittelpunkt des Querschnitts, wird dabei als eine Erstreckung nach innen bezeichnet. Eine Erstreckung der Richtungen R2, R3 von der zentralen Achse der Lagerbuchse weg, wir dabei als eine Erstreckung nach außen bezeichnet.

Unter einer unterschiedlich weiten Erstreckung wird in diesem Zusammenhang verstanden, dass die Erstreckung in einer Richtung größer ist als die Erstreckung in der anderen Richtung. Dies umfasst auch den Fall, dass die Erstreckung in einer der beiden Richtungen gleich oder nahe null ist.

Die hydraulischen Kammern werden durch den Elastomerkörper und durch die Kanalhalbschalen gebildet. Betrachtet man den Querschnitt der Lagerbuchse, so hat der Kern einen Außenumfang, an den sich in radialer Richtung nach außen unmittelbar der Elastomerkörper anschließt. Je nachdem an welcher Position entlang der zentralen Achse der Lagerbuchse der Querschnitt betrachtet wird, erstreckt sich der Elastomerkörper dabei unterschiedlich weit in radialer Richtung nach außen. An den Stirnseiten der Lagerbuchse kann sich der Elastomerkörper bis hin zur Außenhülse erstrecken.

In den Bereichen der Lagerbuchse, in denen sich der Elastomerkörper nicht bis zur Außenhülse hin erstreckt, sind zwischen dem Elastomerkörper und der Außenhülse die Kanalhalbschalen angeordnet. Zwischen den Kanalhalbschalen und dem Elastomerkörper sind die hydraulischen Kammern ausgebildet. Die Kanalhalbschalen weisen wenigstens einen fluidleitenden Kanal auf, der die hydraulischen Kammern miteinander verbindet. Der fluidleitende Kanal ist an der Außenseite der Kanalhalbschalen ausgebildet. Schwingungen der Lagerbuchse führen bei dieser Anordnung zu Schwingungen des Elastomerkörpers und zu einem Austausch von hydraulischer Flüssigkeit zwischen den Kammern. Die Käfigstruktur stabilisiert den Elastomerkörper dabei insbesondere in axialer Richtung. Denkbar ist auch, dass mehrere Kanäle vorhanden. Der Kanal oder die Kanäle können in Form von Vertiefungen auf der äußeren Oberfläche der Kanalhalbschalen ausgebildet sein. Diese Vertiefungen können jeweils am Anfang und Ende in Durchlässe münden, wobei der Durchlass am Anfang eines Kanals bevorzugt mit der einen hydraulischen Kammer und der Durchlass am Ende dann mit der anderen hydraulischen Kammer verbunden ist. Die Durchlässe sind dabei im Wesentlichen einfache Löcher in der Kanalhalbschale, die sich von der Außenseite der Kanalhalbschale zur Innenseite der Kanalhalbschale erstrecken. In jedem Fall ist auf der Innenseite der Kanalhalbschalen eine Nut ausgebildet, in die ein Teil des Elastomerkörper als Feder eingreift.

Von besonderem Vorteil sind in diesem Zusammenhang die Versteifungsstrukturen. Sowohl der Kern als auch die Käfigstruktur sind aus einem Material, das zu einem geringeren Grad elastisch verformbar ist als der Elastomerkörper. Bevorzugt ist das Material im Verhältnis zum Elastomer vernachlässigbar elastisch verformbar. Beispielsweise ist das Material der Versteifungsstruktur Aluminium, Stahl oder ein Kunststoff. Dabei ist es nicht notwendig und auch nicht ausgeschlossen, dass der Kern und die Käfigstruktur aus demselben Material bestehen. Die Versteifungsstrukturen sind ebenfalls aus einem solchen gering oder vernachlässigbar elastisch verformbaren Material. Bevorzugt sind die Versteifungsstrukturen einstückig mit dem Kern oder der Käfigstruktur ausgebildet. In jedem Fall sind die Versteifungsstrukturen am Kern so angeordnet, dass sie sich innerhalb des Elastomerkörpers befinden. Die Versteifungsstrukturen an der Käfigstruktur können sich innerhalb des Elastomerkörpers befinden oder aber an dieser angebunden sein. In den Bereichen, in denen die Versteifungsstrukturen innerhalb des Elastomerkörpers angeordnet sind oder an den Elastomerkörper angebunden sind, ist die elastische Verformbarkeit des Elastomerkörpers verringert. Mit anderen Worten: Der Elastomerkörper ist in diesen Bereichen durch die Versteifungsstrukturen versteift. Man erkennt, dass in einer Ausführungsvariante denkbar ist, dass alle Versteifungsstrukturen vollständig vom Elastomerkörper umschlossen sind. Denkbar ist aber auch, dass nur die Versteifungsstruktur am Kern vollständig vom Elastomerkörper umschlossen ist.

Die Versteifung unterstützt die Pumpwirkung des Elastomerkörpers. Die Versteifungsstrukturen können dabei am Kern, an der Käfigstruktur oder sowohl am Kern als auch an der Käfigstruktur ausgebildet sein. Besonders bevorzugt ist dabei, dass mindestens am Kern eine Versteifungsstruktur ausgebildet ist, ganz besonders bevorzugt sind sowohl am Kern als auch an der Käfigstruktur Versteifungsstrukturen ausgebildet. In jedem Fall erstrecken sich am Kern ausgebildete Versteifungsstrukturen in radialer Richtung von Außenseite des Kerns weg. An der Käfigstruktur ausgebildete Versteifungsstrukturen erstrecken sich bevorzugt in radialer Richtung auf die zentrale Achse hin.

Man erkennt, dass es weiterhin von besonderem Vorteil ist, dass sich die Versteifungsstrukturen in verschiedenen Richtungen unterschiedlich weit nach innen oder nach außen erstrecken. Dies führt dazu, dass bei hoher Pumpwirkung, die der Elastomerkörper in Bezug auf die hydraulischen Kammern entfalten kann, insbesondere eine Spreizung der radialen Steifigkeiten der an der Pumpwirkung beteiligten Bereiche des Elastomerkörpers sehr genau auf die gewünschten Anforderungen eingestellt werden können. Die mit entsprechenden Versteifungsstrukturen ausgestatteten Bauteile können in der Folge zwar punkt- oder spiegelsymmetrisch nicht jedoch rotationssymmetrisch in Bezug auf die zentrale Achse der Lagerbuchse sein.

Mindestens die Versteifungsstrukturen des Kerns sind jeweils vollständig vom Elastomerkörper bedeckt, d. h. vollständig vom Elastomerkörper umschlossen. Eine Versteifungsstruktur, die am Kern ausgebildet ist, kann dabei einstückig mit dem Kern ausgebildet sein oder beispielsweise auf einen Kern aufgespritzt werden. Beispielsweise kann eine Versteifungsstruktur aus einem verstärkten Kunststoffcompound um einen metallischen Kern herum- oder aufgespritzt werde, Die Innenseite einer solchen aufgespritzten Versteifungsstruktur kann dabei vollständig an der Außenseite des Kerns anliegen, die Außenseite einer solchen Versteifungsstruktur ist vollständig vom Elastomerkörper bedeckt, was in diesem Zusammenhang vorliegend ebenfalls als vollständig von Elastomerkörper umschlossen angesehen wird. Denkbar ist aber auch, dass zwischen Versteifungsstruktur und Kern Durchgangslöcher vorhanden sind, oder dass die Versteifungsstruktur auf der kernzugewandten Seite Rippen aufweist.

Dies bietet den großen Vorteil, dass unabhängig von der Geometrie der Versteifungsstruktur der Elastomerkörper die außenumfangseitige Geometrie der Trennmembran definiert. Damit kann die Trennmembran als Teil des Elastomerkörpers unabhängig von der Geometrie der Versteifungsstruktur immer rotationssymmetrisch ausgebildet sein. Insbesondere ist der Elastomerkörper in Bezug auf die zentrale Achse der Lagerbuchse rotationssymmetrisch. Dies ermöglicht eine besonders einfache Montage der Kanalhalbschalen trotz der nicht rotationssymmetrisch ausgebildeten Versteifungsstrukturen, wie weiter unten noch im Detail ausgeführt wird.

In einer besonders günstigen Ausführungsvariante ist vorgesehen, dass die Versteifungsstruktur am Kern und die Versteifungsstruktur an der Käfigstruktur in radialer Richtung miteinander korrespondieren. "In radialer Richtung miteinander korrespondieren" meint dabei Folgendes: Die Versteifungsstruktur am Kern erstreckt sich wie oben beschrieben in einer radialen Richtung R2 weiter nach außen als in einer radialen Richtung R3. Gleichzeitig erstreckt sich die Versteifungsstruktur an der Käfigstruktur in der radialen Richtung R2 weiter nach innen als in der radialen Richtung R3.

Im bevorzugten Fall ergibt sich sogar eine axiale Überlappung, die zu einer besonders hohen Pumpleistung des hydraulischen Lagers führt. Durch die Einstellung der axialen Überlappung kann die Pumpleistung des hydraulischen Lagers und damit verbunden die hydraulische Dämpfungs- bzw. Tilgungswirkung des Lagers an die Aufgabe angepasst werden. Mit anderen Worten, es ist besonders günstig, wenn die Versteifungsstruktur am Kern und die Versteifungsstruktur an der Käfigstruktur in axialer Richtung gesehen ganz oder teilweise überlappend angeordnet sind. "In axialer Richtung gesehen" meint dabei, dass man die Lagerbuchse in der Richtung betrachtet, in der die axiale Richtung R1 verläuft. D. h. der Betrachter schaut genau in die Richtung, in der die axiale Richtung R1 sich erstreckt. Bei einer solchen Betrachtungsrichtung bedeutet eine axiale Überlappung, dass die Versteifungsstrukturen der Käfigstruktur und die Versteifungsstrukturen des Kerns kulissenartig vor- oder hintereinander angeordnet sind und sich in der Betrachtungsrichtung zumindest teilweise gegenseitig verdecken. Bei Betrachtung in axialer Richtung nehmen die Versteifungsstrukturen eine Fläche ein, die zur besseren Beschreibung im Folgenden als Projektionsflächen bezeichnet werden. Die einander wie oben beschrieben verdeckenden Flächen werden dabei dann als überlappende Projektionsflächen bezeichnet. Bei einer teilweisen Überlappung ist es besonders günstig, wenn die überlappenden Projektionsflächen jeweils mindestens 5 % der jeweiligen Projektionsfläche einnehmen, bevorzugt nimmt die überlappende Projektionsfläche mindestens 10 % der jeweiligen Projektionsfläche ein.

In einer besonders günstigen Ausführungsvariante wird die Käfigstruktur von zwei Ringen gebildet, wobei die Versteifungsstrukturen an den Ringen ausgebildet sind. Die Ringe der Käfigstruktur sind dabei unabhängig voneinander. Besonders bevorzugt gibt es auch keinen Steg oder ähnliches, der die Ringe miteinander verbindet. Durch ihre zylindrische Form hat die Lagerbuchse eine erste und eine zweite Stirnseite, die jeweils an den Enden der zentralen Achse ausgebildet sind. Der erste Ring ist dann bevorzugt im Bereich der ersten Stirnseite angeordnet und der zweite Ring im Bereich der zweiten Stirnseite. Der Elastomerkörper umschließt die beiden Ringe und mithin die Käfigstruktur und/oder er ist an den Käfigstrukturen angebunden. Insbesondere sind die Außenumfangsflächen der Ringe zumindest bereichsweise frei von Elastomer, wenn die Ringe und die Außenhülse aus Kunststoff sind und miteinander im Zusammenhang mit dem Aufbau bzw. der Montage des Lagers verschweißt werden.

Vorteilhaft ist es dabei, wenn der Elastomerkörper zwei äußere Membranen aufweist, die die Käfigstruktur umschließen und/oder an ihr angebunden sind. Diese beiden äußeren Membranen bilden die Anbindungsstrukturen mit denen der Elastomerkörper mit der Innenseite der Außenhülse in Kontakt steht. Die äußeren Membranen sind, wie der gesamte Elastomerkörper, rotationssymmetrisch in Bezug auf die zentrale Achse der Lagerbuchse. Die äußeren Membranen können scheibenförmig ausgebildet sein. Die äußeren Membranen können jeweils in einer Ebene liegen, die sich senkrecht zur zentralen Achse der Lagerbuchse erstreckt. Denkbar ist auch, dass die äußeren Membranen konisch geformt sind oder bereichsweise in einem Winkel zu R2 und/oder R3 verlaufen. Dies bietet den Vorteil, dass sich je nach Winkel unterschiedliche Membranlängen ergeben können, so dass hierdurch die dynamische Nachgiebigkeit, d. h. die Blähsteifigkeit, angepasst werden kann. Außerdem führt eine schräge Membran zu einer größeren Länge und damit verbunden zu geringeren Dehnungen, was eine höhere Lebensdauer der Membran und mithin des Lagers begünstigen kann.

Innerhalb der äußeren Membranen erstrecken sich dann die Ringe der Käfigstruktur unterschiedlich weit in Richtung R2, R3 nach innen auf die Zentralachse zu. Der Bereich, indem die äußeren Membranen die Ringe des Käfigs umschließen, kann als Randwulst angesehen werden, der die Membranen nach außen hin begrenzt. Die Dicke des Randwulstes ist konstant und setzt sich aus der Dicke des Elastomerkörpers, insbesondere der Dicke der äußeren Membran im Bereich des Randwulstes, und der Dicke des Käfigringes zusammen, wobei der jeweilige Anteil, den die Dicke des Elastomerkörpers und die Dicke des Käfigringes an der Gesamtdicke des Randwulstes aufweisen variabel ist.

Weiterhin ist es von besonderem Vorteil, wenn der Elastomerkörper eine Trennmembran aufweist, die die hydraulischen Kammern voneinander trennt und die Versteifungsstruktur, die am Kern ausgebildet ist, umschließt. In den Bereichen, in denen die Trennmembran nicht versteift ist, ist kann sie daher sehr flexibel sein. In einer besonders günstigen Ausführungsvariante ist außerdem vorgesehen, dass die Kanalhalbschalen auf ihrer Innenseite eine Nut aufweisen, in die der äußere Rand der Trennmembran im montierten Zustand eingreift. Die Trennmembran kann dann mit ihrem vom Kern entfernt liegenden Ende als Feder in diese Nut eingreifen. Vorstellbar ist dabei auch, dass die Nut von zwei Führungsflanken begrenzt wird. Diese Führungsflanken können sich von den Kanalhalbschalen in radialer Richtung nach innen erstrecken. Denkbar ist dabei dass die äußere, rotationssymmetrische Kontur der Trennmembran des Elastomerkörpers eine Überdeckung mit der Innenkontur der Nut aufweist. Dies bietet den Vorteil, dass die Bauteile gegeneinander vorgespannt sind. Dabei ist der Außendurchmesser der rotationssymmetrischen Kontur Trennmembran des Elastomerkörpers kleiner als der Innendurchmesser der rotationssymmetrischen der Nut. Die Trennmembran liegt mit ihren äußeren Seitenflächen an den inneren Seitenflächen der Nut, insbesondere also an den Innenseiten der Führungsflanken an. Hierdurch ist eine gute Abdichtung der ersten hydraulischen Kammer gegen die zweite hydraulische Kammer auch bei leichten radialen Auslenkungen des Kernes gewährleistet. In anderen Worten bleibt die Trennmembran durch die Vorspannung auch bei leichten radialen Auslenkungen in Kontakt mit der Nutoberfläche.

In jedem Fall ist es auch in diesem Zusammenhang wiederum günstig, wenn der Umfang der Trennmembran kreisförmig ist und die radiale Erstreckung der Versteifungsstruktur und die radiale Erstreckung des Elastomerkörpers über der Vorwölbung in wenigstens zwei Richtungen variabel sind. Günstig ist es auch, wenn die Trennmembran sich nach außen verjüngt, bevorzugt trapezförmig ist. Trapezförmig meint dabei, dass die Trennmembran einen trapezförmigen Querschnitt hat, wenn die Lagerbuchse entlang einer Ebene geschnitten wird, die sich entlang der Zentralachse der Lagerbuchse erstreckt.

Günstig ist es dabei auch, wenn die Trennmembran mindestens in den beiden radialen Richtungen R2 und R3 maximal 10 mm, bevorzugt maximal 6 mm, besonders bevorzugt maximal 5 mm, von der innere Oberfläche der Außenhülse beabstandet ist. Die kurze Distanz zur Außenhülse wirkt sich derart vorteilhaft aus, dass die Trennmembran einen möglichst großen Durchmesser hat. Es bleibt innerhalb der 5 mm dann gerade noch ausreichend Platz, um die Kanalhalbschale mit einem Kanal, der typischerweise 2-3 mm tief ist, zu versehen, ohne dass die Wandstärke unter 2 mm in diesem hoch belasteten Bereich sinken muss. In einem denkbaren Ausführungsbeispiel kann die Wandstärke etwa 2,5 bis 3 mm betragen.

Weiterhin günstig ist es auch, wenn die Geometrie der Versteifungsstruktur des Kernes mit der Geometrie der Trennmembran korrespondiert. Damit ist gemeint, dass die äußere Form der Versteifungsstruktur des Kernes, wenn sie in einem Längsschnitt betrachtet wird, der Form, nicht aber der Größe der Geometrie der Trennmembran entspricht. Entsprechend dem bereits oben Ausgeführten kann die Größe der Versteifungsstruktur je nach Richtung R2 oder R3 variieren und sich unterschiedlich weit in die Trennmembran hineinerstrecken. Beispielsweise kann vorgesehen sein, dass die Trennmembran mindestens an einer Stelle um 50 % ihrer radialen Erstreckung mittels des Versteifungsvorsprungs versteift ist.

In jedem Fall ist es günstig, wenn die äußeren Membranen und die Trennmembran einstückig ausgebildet sind. Das heißt, dass der Elastomerkörper aus einem einzigen Stück gebildet wird, das sowohl die äußeren Membranen als auch die Trennmembran umfasst. Kern und Käfigstrukturen können dabei in einem einzigen Vulkanisierungsschritt von dem Elastomerkörper umschlossen werden. Dies ist besonders mit Blick auf eine einfach Herstellung von Vorteil.

Weiterhin ist denkbar, dass die Kanalhalbschalen im montierten Zustand eine zusätzliche Stützfunktion für die Käfigstruktur ausüben. Dies ist insbesondere günstig, wenn die Käfigstruktur keine Elemente aufweist, die die Ringe der Käfigstruktur miteinander verbinden. Die Ringe der Käfigstruktur können mit Hilfe der Kanalhalbschalen in axialer Richtung auf Distanz gehalten werden. Die Käfigstruktur kann in diesem Fall ausschließlich aus den beiden oben beschriebenen Ringen bestehen.

Günstig ist es auch, wenn die Kanalhalbschalen im montierten Zustand einen geschlossenen Ring bilden, der die Trennmembran umfangsseitig zu 360° umfasst. Dies gilt insbesondere im Zusammenspiel mit dem rotationssymmetrisch ausgebildeten Elastomerkörper. Zur Montage werden dabei einfach jeweils zwei Kanalhalbschalen an den Elastomerkörper angelegt, so dass ihre Kanalsegmente zusammen mindestens einen gemeinsamen Kanal bilden, welche die beiden hydraulischen Kammern miteinander verbinden. Auch ist es möglich, dass die Kanalhalbschalen insbesondere in dem Bereich in dem der Kanal von der einen Kanalhalbschale in die andere Kanalhalbschale übergeht, mit einander verbindbar sind. Die Verbindung kann beispielsweise über einen einfachen Formschluss, eine Klickverbindung oder dergleichen erfolgen In einer besonders einfachen Variante können die Kanalhalbschalen auch baugleiche Bauteile sein.

Weiterhin erkennt man, dass sich die maximale radiale Erstreckung der Trennmembran aus dem Abstand der Innenseite der Außenhülse zum Kern abzüglich der Tiefe des fluidleitenden Kanals in radialer Richtung und abzüglich der Wandstärke der Kanalhalbschale im Bereich des Kanals ergibt.

In einem weiteren Aspekt ist die Lagerbuchse weitestgehend spiegelsymmetrisch zu einer Ebene, die von den Richtungen R2 und R3 aufgespannt wird und durch die Mitte der Versteifungsstruktur 21 verläuft. Weitestgehend meint dabei, dass es in Details der Lagerbuchse hinsichtlich der Spiegelsymmetrie Ausnahmen geben kann. D. h. es kann einzelne Elemente, wie etwa den Kanalverlauf der fluidleitenden Kanäle oder die Position von Anspritzpunkten geben, die nicht spiegelsymmetrisch sind. Die Hauptstrukturen, wie etwa die Position der Versteifungsstruktur am Kern, die Anordnung der Ringe der Käfigstruktur, die äußeren Membranen und die Trennmembran des Elastomerkörpers, sowie beispielsweise die Nut und die Randwulste der Kanalhalbschalen folgen dieser Spiegelsymmetrie.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: Einen schematischen Schnitt durch eine Lagerbuchse entlang der Zentralachse A,
- Fig. 2a: einen schematischen Querschnitt durch eine Ausführungsform eines Kerns entlang der Schnittebene B-B aus Fig. 1,
- Fig. 2b: eine perspektivische Ansicht des Kerns aus Fig. 2a,
- Fig. 2c: einen schematischen Querschnitt durch eine weitere Ausführungsform eines Kerns entlang der Schnittebene B-B aus Fig. 1,

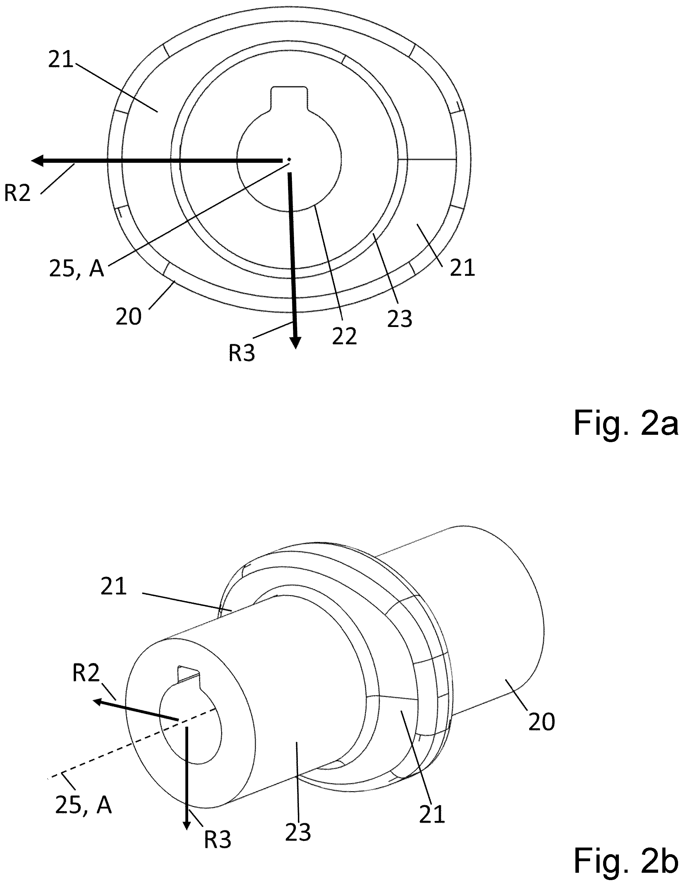

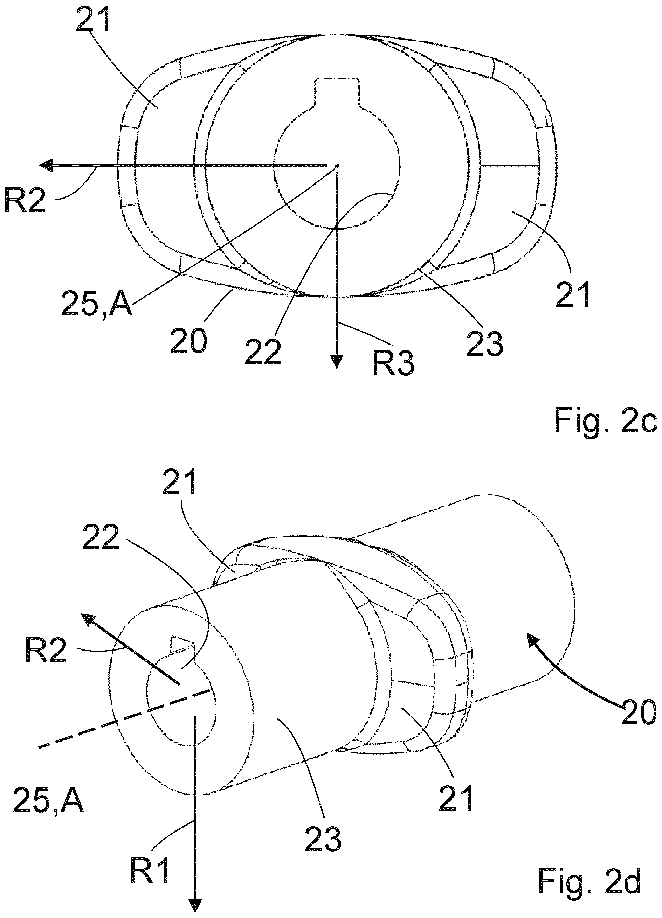

- Fig. 2b: eine perspektivische Ansicht des Kerns aus Fig. 2c,

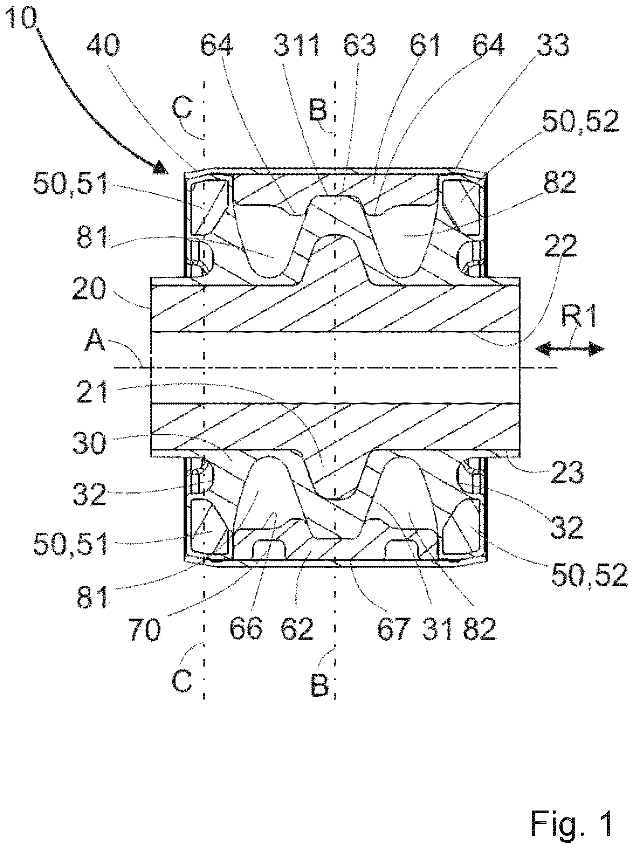

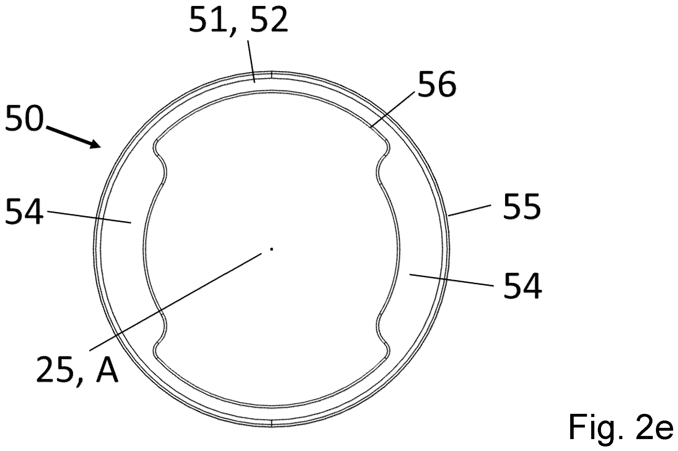

- Fig. 2e: einen schematischen Schnitt durch einen Teil der Käfigstruktur entlang der Schnittebene C-C aus Fig. 1,

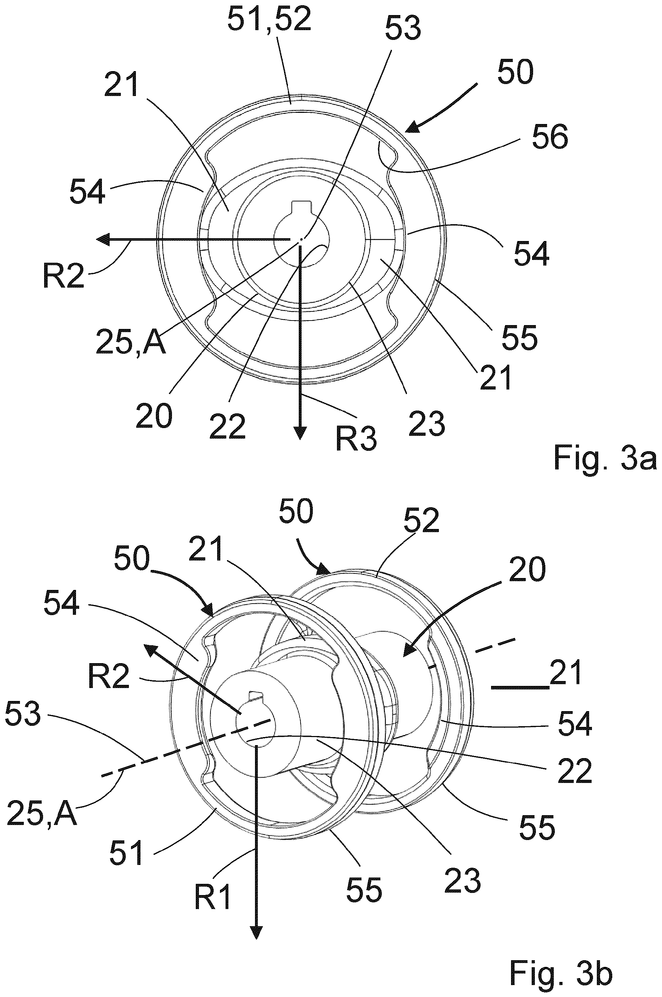

- Fig. 3a: einen Blick in Richtung der Zentralachse A auf Käfig und Kern eines Ausführungsbeispiels,
- Fig. 3b: eine perspektivische Ansicht der Käfigstruktur und des Kern aus Fig. 3a,

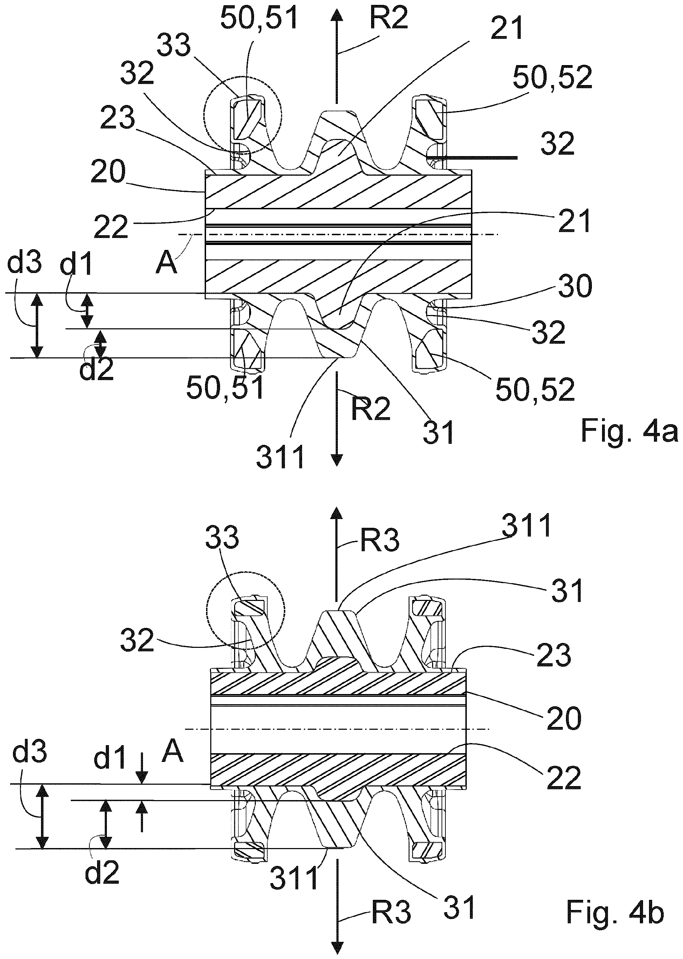

- Fig. 4a: einen schematischen Schnitt durch Kern, Elastomerkörper und Käfigstruktur,
- Fig. 4b: einen schematischen Schnitt durch Kern, Elastomerkörper und Käfigstruktur,

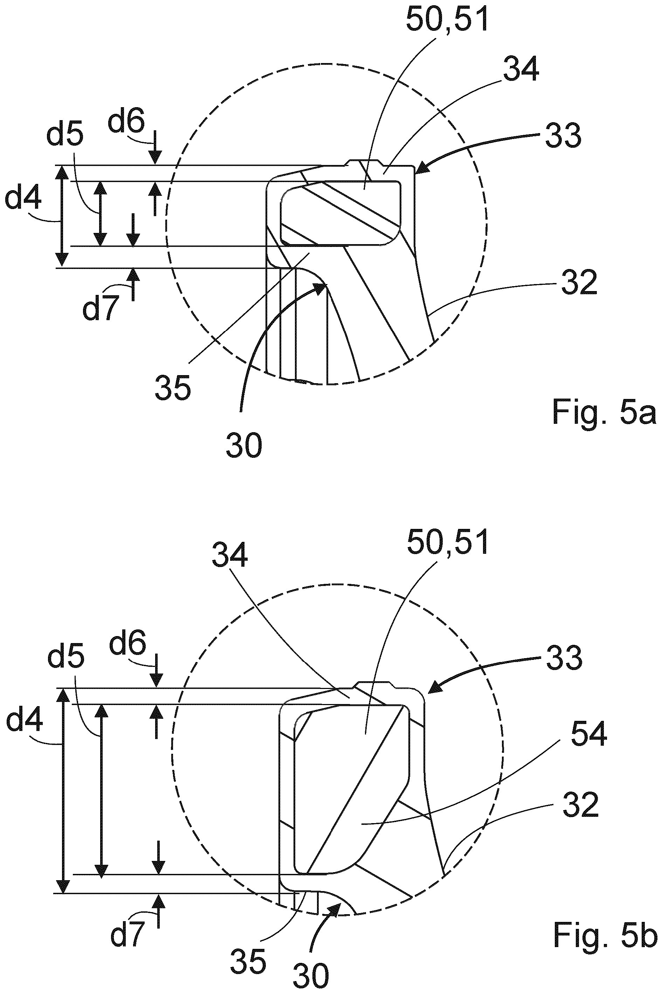

- Fig. 5a: eine Detailansicht eines Schnitts durch die Randwulst der äußeren Membran des Elastomerkörpers,
- Fig. 5b: eine weitere Detailansicht eines Schnitts durch die Randwulst der äußeren Membran des Elastomerkörpers,

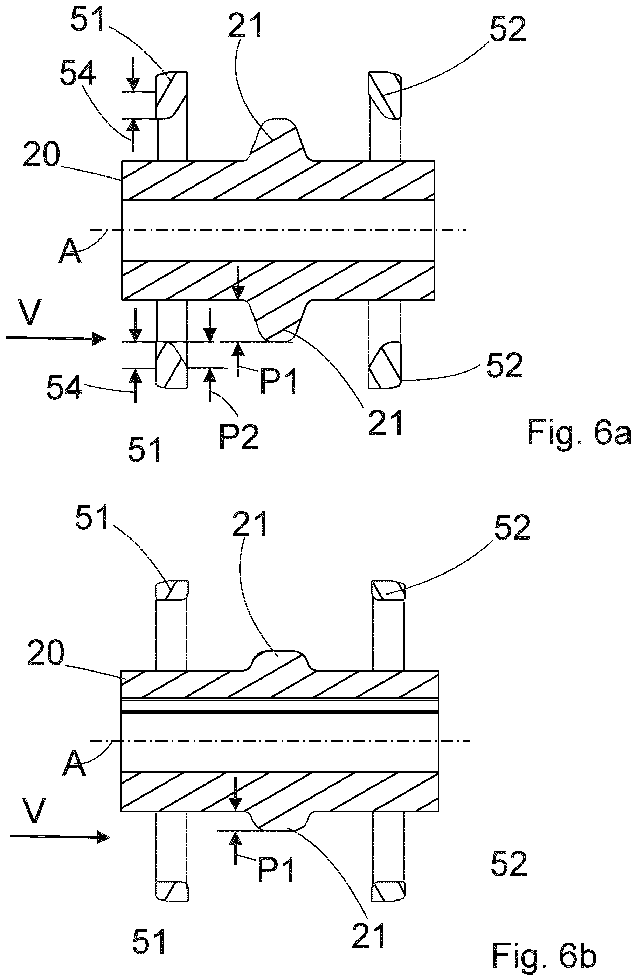

- Fig. 6a: eine schematische Darstellung der Anordnung der Versteifungsstrukturen,
- Fig. 6b: eine schematische Darstellung der Anordnung der Versteifungsstrukturen.

Man erkennt in Fig. 1 eine Lagerbuchse 10 mit einem Kern 20, einem Elastomerkörper 30 und einer Außenhülse 40. In den Elastomerkörper 30 ist eine Käfigstruktur 50 eingebettet. Die Käfigstruktur weist einen ersten Ring 51 und einen zweiten Ring 52 auf. Zwischen dem Elastomerkörper 30 und der Außenhülse 40 sind eine erste Kanalhalbschale 61 und eine zweite Kanalhalbschale 62 angeordnet. Die Lagerbuchse 10 weist eine Zentralachse A auf. Die Zentralachse A erstreckt sich in axialer Richtung R1 in der Mitte des Kerns 20. Wird die Lagerbuchse 10 entlang einer Ebene geschnitten, die sich senkrecht zur Zentralachse A erstreckt, so hat die Außenhülse eine kreisförmige Außenkontur. Die Zentralachse A verläuft dann durch den Mittelpunkt dieses Kreises.

Die Kanalhalbschalen 61, 62 begrenzen gemeinsam mit dem Elastomerkörper 30 eine erste hydraulische Kammer 81 und eine zweite hydraulische Kammer 82. Die Außenseite 67 der Kanalhalbschalen 61, 62 ist der Außenhülse 40 zugewandt. Die Innenseite 66 der Kanalhalbschalen 61, 62 ist dem Elastomerkörper 30 zugewandt. An der Außenseite 67 der Kanalhalbschalen 61, 62 ist wenigstens ein fluidleitender Kanal 70 ausgebildet. Der fluidleitende Kanal 70 ist dabei als Vertiefung an der Außenseite 67 ausgebildet und jeweils durch einen - in Fig. 1 aufgrund der dargestellten Schnittebene nicht sichtbaren - Durchlass mit der ersten hydraulischen Kammer 81 und der zweiten hydraulischen Kammer 82 fluidleitend verbunden.

Der Elastomerkörper 30 weist eine Trennmembran 31 und zwei äußere Membranen 32 auf. Die Innenseite des Elastomerkörpers 30 liegt an der Außenseite des Kerns 20 an. Der Elastomerkörper besteht aus einem einzigen vulkanisierten Stück.

Die Trennmembran 31 trennt die erste hydraulische Kammer 81 von der zweiten hydraulischen Kammer 82. Das äußere Ende 311 der Trennmembran 31 greift dabei in eine Nut 63 ein, die an der Innenseite 66 der Kanalhalbschalen 61, 62 ausgebildet ist. Dabei ist die Trennmembran sehr nah an der Innenoberfläche der Außenhülse 40 beabstandet. Die Nut 63 wird von zwei Führungsflanken 64 begrenzt. Die Führungsflanken 64 verhindern auch bei stärkeren Schwingungen, dass die Trennmembran 31 unbeabsichtigt aus der Nut 63 rutscht.

Die äußeren Membranen 32 bilden die stirnseitigen Begrenzungen der hydraulischen Kammern 81, 82. Sie umschließen die Käfigstruktur 50, wobei jede der äußeren Membranen 32 einen Ring 51, 52 der Käfigstruktur 50 umschließt. Jede äußere Membran 32 ist kreisscheibenförmig, d. h. sie hat die Gestalt einer kreisrunden Membranscheibe, und weist eine Randwulst 33 auf. Die Randwulst 33 begrenzt die Membranscheibe in Richtung der Außenhülse. Außerdem umschließt die Randwulst 33 den jeweiligen Ring 51, 52 der Käfigstruktur 50. Außerdem ist es möglich, dass die äußeren Membranen 32 zumindest bereichsweise von der Senkrechten auf R1 abweichen. In dem Fall sind die äußeren Membranen 32 nicht oder nicht vollständig scheibenförmig, sondern haben mindestens abschnittsweise die Geometrie eines sehr flachen Kegels.

Der Kern 20 weist eine Versteifungsstruktur 21 auf. Die Versteifungsstruktur 21 erstreckt sich dabei in radialer Richtung, d. h. in einer im Wesentlichen senkrecht zur axialen Richtung R1 verlaufenden Richtung, an der Außenseite 23 des Kerns in Richtung auf die Innenseite der Außenhülse 40 hin. Die Versteifungsstruktur 21 ist derart am Kern 20 ausgebildet, dass sie in die Trennmembran 31 des Elastomerkörpers 30 zu in etwa 50 % hineinragt. Man erkennt, dass sowohl die äußere Kontur der Trennmembran 31 als auch die äußere Kontur der Versteifungsstruktur 21 trapezförmig sind. Die Form der Kontur der Versteifungsstruktur 21 entspricht mithin weitgehend der Form der Kontur der Trennmembran 31. In dem Bereich, in dem die Versteifungsstruktur 21 in die Trennmembran 31 hineinragt, wird die Steifigkeit der Trennmembran 31 durch die Versteifungsstruktur 21 erhöht.

Die äußere Kontur des Elastomerkörpers 30 ist rotationssymmetrisch zur Zentralachse A ausgebildet. Unter der äußeren Kontur des Elastomerkörpers 30 wird dabei der Teil der in Figur 1 erkennbaren Kontur des Elastomerkörpers 30 verstanden, der der Außenhülse 40 der Lagerbuchse 10 zugewandt ist und nicht in Kontakt mit dem Kern 20 steht. Dabei weist die äußere, rotationssymmetrische Kontur der Trennmembran 31 des Elastomerkörpers 30 eine Überdeckung mit der Innenkontur der Nut 63 auf, d. h. sie ist im montierten Zustand radial vorgespannt. Dabei ist der Außendurchmesser der rotationssymmetrischen Kontur Trennmembran 31 des Elastomerkörpers 30 kleiner als der Innendurchmesser der rotationssymmetrischen der Nut 63. Die Trennmembran 31 liegt mit ihren äußeren Seitenflächen an den inneren Seitenflächen der Nut 63, insbesondere also an den Innenseiten der Führungsflanken 64 an. Hierdurch ist eine gute Abdichtung der ersten hydraulischen Kammer 81 gegen die zweite hydraulische Kammer 82 auch bei leichten radialen Auslenkungen des Kernes 20 gewährleistet. In anderen Worten bleibt die Trennmembran 31 durch die Vorspannung auch bei leichten radialen Auslenkungen in Kontakt mit der Nutoberfläche.

Im Gegensatz dazu erkennt man in den Figuren 2a, 2b, 2c und 2d, dass die äußere Kontur des Kerns 20 im Bereich der Versteifungsstruktur 21 nicht rotationssymmetrisch, sondern lediglich punktsymmetrisch gegenüber der Zentralachse A ist. Die Figuren 2a und 2c zeigen dabei jeweils einen Querschnitt durch beispielhafte Ausführungsformen des Kerns 20 entlang der in Fig. 1 dargestellten Schnittebenen B-B, wobei die Zentralachse A senkrecht auf dieser Schnittebene B-B steht. Die Zentralachse A verläuft insofern durch den Mittelpunkt 25 des hier dargestellten Kerns 20. Von der Zentralachse A aus erstreckt sich der äußere Umfang des Kerns 20 im Bereich der Versteifungsstruktur 21 in den radialen Richtungen R2, R3 unterschiedlich weit nach außen, d. h. in Richtung auf die hier nicht dargestellte Außenhülse zu. Ferner ist der äußere Umfang 23 des Kerns 20 außerhalb des Bereichs der Versteifungsstruktur 21 dargestellt. Man erkennt, dass sich die Versteifungsstruktur 21 in den beiden gezeigten Ausführungsbeispielen jeweils unterschiedlich weit in den Richtungen R2 und R3 erstreckt. Während die in Fig. 2a gezeigte Ausführungsform zumindest eine geringe Erstreckung in Richtung R3 zeigt, ist in der in Fig. 2c gezeigten Ausführungsform erkennbar, dass sich die Erstreckung in Richtung R3 im Wesentlichen null beträgt. In beiden Fällen erstreckt sich die Versteifungsstruktur 21 insofern unterschiedlich weit in Richtung R2 und R3. Insbesondere erstreckt sich die Versteifungsstruktur 21 weiter in Richtung R2 als in Richtung R3.

In Fig. 2e erkennt man, dass auch die Ringe 51, 52 der Käfigstruktur 50 nicht rotationssymmetrisch ausgebildet sind. Man sieht hier einen Querschnitt durch einen solchen Ring 51 entlang der in Fig. 1 dargestellten Schnittebenen C-C, wobei die Zentralachse A senkrecht auf dieser Schnittebene C-C steht. Ein nicht dargestellter Schnitt durch den parallelen Ring 52 sähe identisch aus. Man erkennt, dass der Außenumfang 55 des Rings 51 kreisrund ist. Durch den Mittelpunkt 53 des Rings 51 verläuft die Zentralachse A. Von der zunächst ebenfalls runden Innenumfang 56 ausgehend erstrecken sich die Versteifungsstrukturen 54 des Rings 51 in radialer Richtung R2 nach innen auf die Zentralachse A zu.

In den Figuren 3a und 3b erkennt man, wie die Versteifungsstrukturen 21, 54 des Kerns 20 und der Käfigstruktur 50 miteinander korrespondieren können. Dabei schaut man in Fig. 3a, vergleichbar mit den Figuren 2a, 2b und 2e entlang der Richtung R1, in der die Zentralachse A verläuft. Man erkennt den Kern 20 mit der Versteifungsstruktur 21, die sich in radialer Richtung vorwiegend in Richtung R2 erstreckt. Weiterhin erkennt man die Käfigstruktur 50, nämlich den Ring 51, 52 mit den Versteifungsstrukturen 54, die sich ebenfalls im Wesentlichen in Richtung R2 erstrecken. Man erkennt, dass sich die Versteifungsstruktur 21 des Kerns 20 nach außen erstreckt, während sich die Versteifungsstrukturen 54 der Käfigstruktur 50 nach innen erstrecken. In der Ansicht in Fig. 3a liegen die beiden Ringe 51, 52 der Käfigstruktur 50 dabei deckungsgleich unmittelbar hintereinander in der optischen Blickrichtung. In der perspektivischen Ansicht in Fig. 3b erkennt man, dass sie jeweils im Bereich des vorderen und hinteren Endes des Kerns 20 angeordnet sind.

Fig. 4a zeigt einen weiteren Schnitt durch eine Lagerbuchse 10, wobei die Schnittebene durch die radiale Richtung R2 und die axiale Richtung R1 aufgespannt wird. Im Vergleich dazu zeigt die Fig. 4b einen Schnitt durch dieselbe Lagerbuchse 10, wobei die Schnittebene in Fig. 4b durch die radiale Richtung R3 und die axiale Richtung R1 aufgespannt wird. Nicht dargestellt sind in den Figuren 4a und 4b die Kanalhalbschalen und die Außenhülse. Diese sind in der Lagerbuchse gleichwohl vorhanden. Die entsprechenden Bauteile sind nur im Sinne der Übersichtlichkeit hier ausgeblendet. Man erkennt in den Figuren 4a und 4b, dass sich die radiale Erstreckung d3 der Trennmembran 31 über dem Kern 20 zusammensetzt aus der radialen Erstreckung d1 der Versteifungsstruktur 21 und der radialen Erstreckung d2 des Elastomerkörpers 30 über der Versteifungsstruktur. Man erkennt weiterhin, dass die radiale Erstreckung d3 der Trennmembran 31 in alle radialen Richtungen konstant ist. In der Folge ist der Außenumfang der Trennmembran 31 kreisförmig und rotationssymmetrisch in Bezug auf die Zentralachse A. Der Anteil, den die radiale Erstreckung d1 der Versteifungsstruktur 21 an der gesamten radialen Erstreckung d3 der Trennmembran 31 einnimmt ist dagegen je nach radialer Richtung R2, R3 unterschiedlich. Mit anderen Worten erkennt man, dass die Strecke der radialen Erstreckung d3 stets konstant ist und dass diese Strecke als Summe der Strecke der radialen Erstreckung d1 und der radialen Erstreckung d2 beschrieben werden kann. Bevorzugt liegt der Anteil, den die Strecke der radialen Erstreckung d1 an der Strecke der radialen Erstreckung d3 hat bei maximal 50 % der Strecke der radialen Erstreckung d3.

In den Figuren 5a und 5b erkennt man, dass sich die Versteifungsstruktur 54 der Ringe 51, 52 in den radialen Richtungen R2, R3 unterschiedlich weit nach innen erstrecken. Dabei zeigen die Figuren 4a und 4b jeweils einen Detailausschnitt eines Schnitts durch die Randwulst 33 der äußeren Membran 32, die einen solchen Ring 51, 52 umschließt. Man erkennt hier, dass die Dicke d4 der Randwulst 33 zusammengesetzt ist aus der Dicke d6 des äußeren Abschnitts 34 der Randwulst, der Dicke d5 des umschlossenen Rings 51 einschließlich der Versteifungsstruktur 54 und der Dicke d7 des inneren Abschnitts 35 der Randwulst 33.

Die Versteifungsstruktur 54 erstreckt sich dabei vorwiegend in Richtung R2 nach innen. Man erkennt insofern, dass die Dicke d5 der Versteifungsstruktur 54 in Fig. 4b in Richtung R2 einen größeren Anteil an der Dicke d4 des Randwulst 33 aufweist als in Richtung R3, wie in Fig. 5a zu sehen.

Die Figuren 6a und 6b zeigen, wie die Versteifungsstrukturen 21, 54 des Kern 20 und der Käfigstruktur 50, 51, 52 miteinander korrespondieren. Die Figuren zeigen schematisch, wie sich die Projektionsflächen P1, P2 der Versteifungsstrukturen 21, 54 bei Blick in einer Richtung V, die parallel zur Zentralachse A verläuft optisch korrespondieren. Die Projektionsfläche P1 ist dabei die optische Fläche die man von der Versteifungsstruktur 21 sieht, wenn man den Kern in Richtung V betrachtet. Die Projektionsfläche P2 ist dabei die optische Fläche, die man von der Versteifungsstruktur 54 sieht, wenn man die Käfigstruktur 50, insbesondere einen der Ringe 51, 52 in Richtung V betrachtet. Dabei zeigt Fig. 6a einen schematischen Schnitt in einer Ebene, in der die Richtung R2 verläuft, in welcher sich die Versteifungsstrukturen 21, 54 nach innen und nach außen erstrecken. Die Fig. 6b zeigt einen schematischen Schnitt in einer Ebene, in der die Richtung R3 verläuft, in der nahezu keine Erstreckung der Versteifungselemente 21, 54 vorhanden ist.

Die Erfindung ist nicht auf eine der vorbeschriebenen Ausführungsformen beschränkt, sondern in vielfältiger Weise abwandelbar.

Beispielsweise kann die Versteifungsstruktur 21 wie oben gezeigt einstückig mit dem Kern 20 ausgebildet sein. Denkbar ist aber auch, dass die Versteifungsstruktur 21 separat auf dem Kern 20 aufgebracht wird und dann mit diesem mit geeigneten Maßnahmen verbunden wird.

Weiterhin kann beispielsweise die kreisrunde Membranscheibe einer äußeren Membran 32 flach oder konisch ausgebildet sein. Ist die kreisrunde Membranscheibe flach, so erstreckt sie sich innerhalb einer radialen Ebene, auf der die Zentralachse senkrecht steht. Ist die kreisrunde Membranscheibe konisch, so liegt der geometrische Mittelpunkt der Membranscheibe auf der Zentralachse A.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- A: Zentralachse
- B: Schnittebene
- C: Schnittebene

- d1: Dicke der Versteifungsstruktur
- d2: Dicke des Elastomerkörpers über dem Kern
- d3: radiale Erstreckung der Trennmembran
- d4: Dicke der Randwulst der äußeren Membran
- d5: Dicke der Versteifungsstruktur
- d6: Dicke des äußeren Abschnitts der Randwulst
- d7: Dicke des inneren Abschnitts der Randwulst

- R1: axiale Richtung
- R2: radiale Richtung
- R3: radiale Richtung

- P1: Projektionsfläche
- P2: Projektionsfläche

- 10: Lagerbuchse

- 20: Kern
- 21: Versteifungsstruktur
- 22: Innenseite
- 23: Außenseite

- 30: Elastomerkörper
- 31: Trennmembran
- 311: äußeres Ende
- 32: äußere Membran
- 33: Randwulst
- 34: äußerer Abschnitt
- 35: innerer Abschnitt

- 40: Außenhülse

- 50: Käfigstruktur
- 51: Ring
- 52: Ring
- 53: Mittelpunkt
- 54: Versteifungsstruktur
- 55: Außenumfang
- 56: Innenumfang

- 61: Kanalhalbschale
- 62: Kanalhalbschale
- 63: Nut
- 64: Führungsflanke
- 66: Innenseite
- 67: Außenseite

- 70: fluidleitender Kanal

## Patentansprüche

1. Lagerbuchse (10) zur hydraulischen Dämpfung in axialer Richtung (R1), wobei die Lagerbuchse (10) einen Kern (20), einen Elastomerkörper (30), eine Käfigstruktur (50, 51, 52), wenigstens zwei Kanalhalbschalen (61, 62), eine Außenhülse (40) und wenigstens zwei hydraulische Kammern (81, 82) aufweist, wobei die hydraulischen Kammern durch wenigstens einen fluidleitenden Kanal miteinander verbunden sind, **dadurch gekennzeichnet, dass** die Käfigstruktur (50, 51, 52) und/oder der Kern (20) Versteifungsstrukturen (54, 21) für den Elastomerkörper (30) aufweisen, wobei sich Versteifungsstrukturen (21), die am Kern (20) ausgebildet sind, in wenigstens zwei radiale Richtungen (R2, R3) unterschiedlich weit nach außen erstrecken, und wobei sich Versteifungsstrukturen (54), die an der Käfigstruktur (50, 51, 52) ausgebildet sind, in wenigstens den zwei radiale Richtungen (R2, R3) unterschiedlich weit nach innen erstrecken, wobei der Elastomerkörper (30) rotationssymmetrisch ausgebildet ist.

2. Lagerbuchse (10) nach Anspruch 1, **dadurch gekennzeichnet, dass** die Versteifungsstruktur (21) am Kern (20) und die Versteifungsstruktur (54) an der Käfigstruktur (50, 51, 52) in radialer Richtung (R2, R3) miteinander korrespondieren.

3. Lagerbuchse (10) nach einem der vorhergehenden Ansprüche, **dadurch gekennzeichnet, dass** die Versteifungsstruktur (21) am Kern (20) und die Versteifungsstruktur (54) an der Käfigstruktur (50, 51, 52) in axialer Richtung R1 gesehen ganz oder teilweise überlappend angeordnet sind.

4. Lagerbuchse (10) nach einem der vorhergehenden Ansprüche, **dadurch gekennzeichnet, dass** die Käfigstruktur (50, 51, 52) von zwei Ringen (51, 52) gebildet wird, wobei die Versteifungsstrukturen (54) an den Ringen ausgebildet sind.

5. Lagerbuchse (10) nach einem der vorhergehenden Ansprüche, **dadurch gekennzeichnet, dass** der Elastomerkörper zwei äußere Membranen (32) aufweist, die die Käfigstruktur (50, 51, 52) umschließen.

6. Lagerbuchse (10) nach einem der vorhergehenden Ansprüche, **dadurch gekennzeichnet, dass** der Elastomerkörper (30) eine Trennmembran (31) aufweist, die die hydraulischen Kammern (81, 82) voneinander trennt und die Versteifungsstruktur (21), die am Kern (20) ausgebildet ist, umschließt.

7. Lagerbuchse (10) nach einem der vorhergehenden Ansprüche, **dadurch gekennzeichnet, dass** die Kanalhalbschalen (61, 62) auf ihrer Innenseite (66) eine Nut (63) aufweisen, in die der äußere Rand (311) der Trennmembran (31) im montierten Zustand eingreift.

8. Lagerbuchse (10) nach Anspruch 7, **dadurch gekennzeichnet, dass** die äußere, rotationssymmetrische Kontur der Trennmembran (31) des Elastomerkörpers (30) eine Überdeckung mit der Innenkontur der Nut (63) aufweist.

9. Lagerbuchse (10) nach einem der vorhergehenden Ansprüche, **dadurch gekennzeichnet, dass** der Umfang der Trennmembran (31) kreisförmig ist und dass die radiale Erstreckung (d1) der Vorwölbung (21) des Kerns (20) und die radiale Erstreckung (d2) des Elastomerkörpers (30) über der Vorwölbung (21) in wenigstens zwei Richtungen (R2, R3) variabel sind.

10. Lagerbuchse (10) nach einem der vorhergehenden Ansprüche, **dadurch gekennzeichnet, dass** die Trennmembran (31) sich nach außen verjüngt, bevorzugt trapezförmig ist.

11. Lagerbuchse (10) nach einem der vorhergehenden Ansprüche, **dadurch gekennzeichnet, dass** die Trennmembran (31) mindestens in den beiden radialen Richtungen R2 und R3 maximal 10 mm, bevorzugt maximal 6 mm, besonders bevorzugt maximal 5 mm, von der innere Oberfläche der Außenhülse (40) beabstandet ist.

12. Lagerbuchse (10) nach einem der vorhergehenden Ansprüche, **dadurch gekennzeichnet, dass** die innere Geometrie der Versteifungsstruktur (21) des Kernes (20) mit der Geometrie der Trennmembran (31) korrespondiert.

13. Lagerbuchse (10) nach einem der vorhergehenden Ansprüche, **dadurch gekennzeichnet, dass** die Trennmembran (31) mindestens an einer Stelle um 50 % ihrer radialen Erstreckung mittels der Versteifungsstruktur (21) versteift ist.

14. Lagerbuchse (10) nach einem der vorhergehenden Ansprüche, **dadurch gekennzeichnet, dass** die Kanalhalbschalen (61, 62) im montierten Zustand eine zusätzliche Stützfunktion für die Käfigstruktur (50, 51, 52) ausüben.

15. Lagerbuchse (10) nach einem der vorhergehenden Ansprüche, **dadurch gekennzeichnet, dass** die Kanalhalbschalen (61, 62) im montierten Zustand einen geschlossenen Ring bilden, der die Trennmembran umfangsseitig 360 ° umfasst.

16. Lagerbuchse (10) nach einem der vorhergehenden Ansprüche, **dadurch gekennzeichnet, dass** sich die maximale radiale Erstreckung (d3) der Trennmembran (31) aus dem Abstand der Innenseite der Außenhülse (40) zum Kern (20) abzüglich der Tiefe des fluidleitenden Kanals (70) in radialer Richtung und abzüglich der Wandstärke der Kanalhalbschale (61, 62) im Bereich des Kanals ergibt.
